# EUROPEAN PATENT APPLICATION

(11) **EP 2 182 628 A1**
(43) Date of publication of application: **05.05.2010**
(21) Application number: 08019067.1
(22) Date of filing: 31.10.2008
(51) Int. Cl.: H02P 6/00, H02K 41/03

(54) **Method and apparatus for controlling a linear motion system**

(71) Applicant: Robert Bosch GmbH, 70469 Stuttgart (DE)
(72) Inventor: Dirkx, Walrick, 5641 JT Eindhoven (NL); Pancras, Wilco, 5612 KG Eindhoven (NL)
(74) Representative: Thürer, Andreas

(57) **Abstract**

This invention relates to a method of controlling a linear motion system having a linear synchronous motor comprising a stator and at least one carrier unit (10b, 10c) moveable in relation to said stator, said stator comprising at least one sensor unit (20, 21, 22, 23, 24) for determining the position of said at least one carrier unit (10b, 10c), wherein the signal of at least one of said sensor units (20; 21; 21; 23; 24) is used to determine the position of a carrier unit (10b; 10c), as a function of the number of the sensor units (21; 23, 24) showing valid signals for said carrier unit.

## Description

### Field of the Invention

The invention relates to a method and an apparatus for controlling a linear motion system having a linear synchronous motor, to a corresponding computer program, and to a corresponding computer program product.

### Prior Art

Linear synchronous motors comprise a longitudinal stator on which at least one translator is freely moveable. A magnetic travelling-field is generated for moving the translators(s). The stator includes separate coil units, each comprising at least one coil. Usually, the magnetic travelling-field is generated by applying a three-phase current to said coil units. Each coil unit has a control-range, i.e. translators within the control-range of a single coil unit can be moved by this coil unit.

One example of a well known linear motor is disclosed in DE 39 00 511 A1. A current with variable frequency and amplitude is applied to the coil units of the longitudinal stator depending on the actual location of the translator, in order to move the translator relative to the stator.

NL 1024992 discloses a prior art linear motion system, which comprises an apparatus for moving carriers in a circulating transport circuit using magnetic movement devices, which comprise magnetic units working together with controllable coil units. Such an apparatus is often used in automated and specific product facilities, where a product is placed on the carrier. During the circulation through the transport circuit, the product has to undergo several process steps. An application of such an apparatus relates to a semiconductor substrate placed on a carrier unit, where various ultra-thin layers are to be deposited (e.g. chemical or physical vapour deposition CVD/PVD).

In such an application field, precise control of the movement of the various product carriers through the circulating transport circuit is essential for the correct performance of the various process actions on the products placed on the product carriers. Magnetic movement devices are used to move the product carriers through the transport circuit, particularly where very high requirements are set for the accuracy of the various process actions, such as the placement of an electronic component or the deposition of a semiconductor layer on a substrate.

The actuation occurs without contact between stator and translator, and without detrimental influences that can disturb the movement of the product carriers through the transport circuit, with the possibility to manipulate different product carriers independently of each other. The apparatus corresponding to the prior art comprises sensor units, which are provided to detect the movement of at least one product carrier and on the basis thereof to generate a detection signal. This detection signal is used to activate the movement devices for the accurate positioning of the product carrier in the transport circuit. This, in combination with the independently controllable coil units, allows for an activation of each product carrier separately and for movement/positioning of each product carrier independently of the other product carriers.

However, the accuracy of the sensor signals for determining the speed and position of the used product carriers depends significantly on the size of the carrier units in relation to the distance in-between two adjacent sensor units. Therefore, under certain circumstances no sensor unit or more than one sensor unit can show valid signals for one carrier unit, which could render it difficult to determine an exact position of said carrier unit.

In view of this prior art, it is an object of the invention to provide a method and an apparatus for controlling such a linear motion system so that a better positioning of the carrier units can be achieved.

According to the invention a method and an apparatus for controlling a linear motion system, further a corresponding apparatus, a computer program and a computer program product, according to the independent claims are provided. Advantageous embodiments are defined in the dependent claims.

### Advantages of the invention

The invention provides a method for controlling a linear motion system having a linear synchronous motor comprising a stator and at least one carrier unit moveable in relation to said stator. Said stator comprises at least one sensor unit for determining the position of said at least one carrier unit. The signal of at least one of said sensor units is used to determine the position of a carrier unit, as a function of the number of said sensor units showing valid signals for said carrier unit. Especially, a signal is said to be valid, if its (average) amplitude is greater than a predefined threshold. Therefore, it can be determined e.g. as a function of the amplitudes and/or of the wave forms of said sensor unit signals, whether said signals are valid or not. Advantageously, the signals of all sensor units showing valid signals are used as a pool for selecting said at least one sensor signal to determine the position of said carrier unit. Therefore, the accuracy of the position determination of said carrier unit can be improved, as a multitude of signals is useable.

According to the invention, it is possible to arrange multiple sensors at the stator. Therefore, it is possible to apply one, two, three or even more than three sensor units in a configuration. The sensor units showing valid signals are said to 'see' a carrier, and to know its position. Advantageously, the controlling method or software is configured to take at least one correct sensor unit (out of all sensor units) for controlling a carrier. This allows an application manufacturer or builder to cope with many different sensor configurations, and therefore provides greater flexibility to design a machine according to the space-requirements. The calibration in software allows for easier mounting of the sensor units.

According to a preferred embodiment, the stator includes at least one sensor unit for determining the position of a carrier unit, and at least one coil unit for moving the carrier unit. Preferably, said at least one coil unit comprises a predefined number of coils, and said at least one sensor unit comprises a predefined number of sensors. The sensors can be magnetic sensors (e.g. Hall sensors) for determining the magnetic field of the carrier magnetic units. This embodiment allows for an accurate determination of the current position of the carrier unit. For further details, NL 1024992 is referred to in its entirety. According to a preferred embodiment, said coil units and said sensor units are periodically arranged.

According to a preferred embodiment, the signal of a intermediately positioned or mid-position sensor unit of said valid sensor units is used, especially in case said number is odd. According to a further preferred embodiment, an, especially weighted, average of said valid sensor unit signals is used in case said number is equal to or greater than two, especially in case said number is even. These embodiments can advantageously be used in connection with a linear motion system as essentially disclosed in NL 1024992. It is understood that further possibilities for using one or more particular sensor unit signals exist without departing from the scope of the invention.

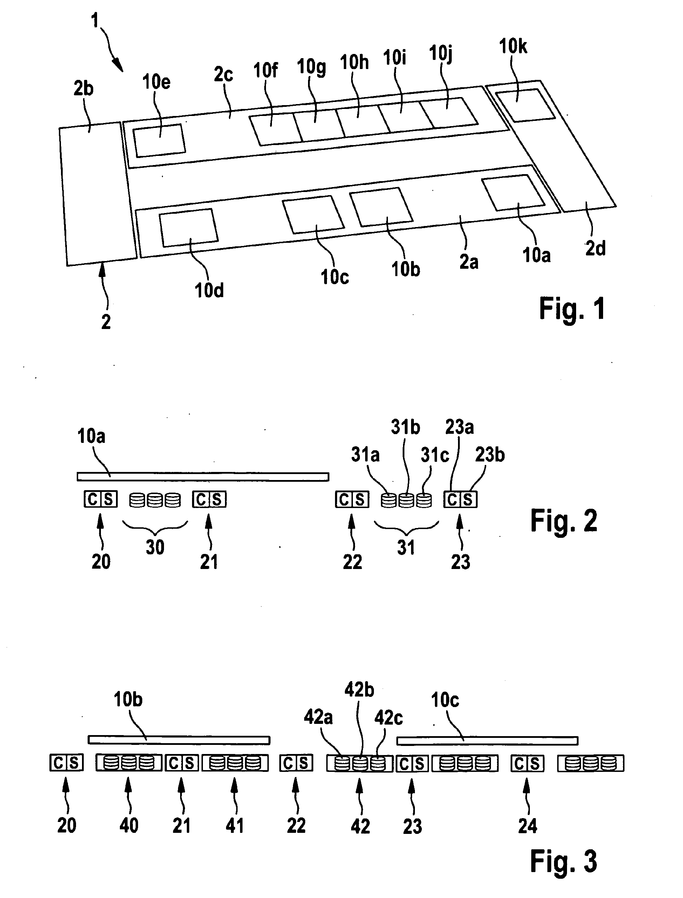

Advantageously, each two stator coil units are separated by two sensor units. In case a carrier is (substantially) larger than the coil-unit-to-coil-unit distance, it is usually sufficient to arrange two sensors at each end of the coil unit, sensing the presence and position of the carrier, thereby arriving at said preferred configuration. As soon as the carrier enters the control-range of a first coil unit, it can be controlled, until it leaves the coil control-range (possibly on the other side), and then a sensor of an adjacent second coil unit will have already detected the carrier. An example of such a preferred embodiment is shown in figure 2.

Advantageously, each two stator coil units are separated by one sensor unit. This embodiment can advantageously be used, if the carriers are (substantially) smaller than a coil-to-coil distance according to said "two sensors/two coils"-configuration above. Having only one sensor unit in-between two coil units (which can be said to be an embedded sensor) allows for a closer arrangement. It can advantageously be avoided that a small carrier is neither within the range of a sensor nor of a coil unit, if the carrier is smaller than the coil unit described above comprising coils and sensors at each end of the coils. According to this embodiment, stator elements can be provided, which comprise two coil units separated by one sensor unit. These stator elements are arranged with a sensor unit in-between two stator elements. An example of such a preferred embodiment is shown in figure 3.

An inventive apparatus performs all steps of the inventive method.

An inventive computer program comprising program code means is configured to perform all steps of the inventive method, when the computer program is executed on a computer or a corresponding processing unit, in particular on an inventive apparatus.

An inventive computer program product comprising program code means stored on a computer readable data carrier is provided for performing the inventive method, when the computer program is executed on a computer or a corresponding processing unit, in particular on an inventive apparatus.

Further advantages and embodiments of the invention will become apparent from the description and the appended figures.

It should be noted that the previously mentioned features and the features to be elucidated in the following are usable not only in the respectively indicated combination, but also in further combinations or taken alone, without departing from the scope of the present invention.

In the drawings:
- Figure 1: shows a schematic plan view of a linear motion system suitable for use with the present invention;
- Figure 2: shows a schematic side view of a first embodiment of a linear motion system according to the invention;
- Figure 3: shows a schematic side view of a second embodiment of a linear motion system according to the invention; and
- Figure 4: shows a flow chart of an embodiment of the present invention.

Like parts are indicated with identical reference numbers in the description below for a better understanding of the invention. Furthermore, for the sake of perceptibility of the figures, not all elements therein are designated with reference numbers.

Figure 1 shows a schematic plan view of a linear motion system (LMS) suitable for use with the present invention. LMS 1 comprises a frame that forms a transport circuit 2, including different stators being formed as transport segments 2a, 2b, 2c and 2d. Various carrier units 10a-10k are placed movably above the circulating transport circuit 2a-2d.

Various products (not shown) can be placed on the carriers 10a-10k, and can undergo various process steps during the circulating movement through the transport circuit 2. For example, the products placed on the carrier units 10a-10k can include electronic printed boards, on which the various electronic components must be placed. In another application, the products can be semiconductor substrates, whereon various thin metallic or semiconductor layers are deposited during various processing steps, e.g. the manufacture of solar cells, chips, or LEDs.

Figure 2 shows a schematic side view of a first embodiment of a linear motion suitable for use with the present invention. A number of coil units 30, 31, etc. including coils 31a, 31b, 31c, etc., and sensor units 20, 21, 22, 23, etc., including sensors 23a, 23b, etc., are installed in the transport circuit and in the transport direction of the carrier units 10a, etc.

The coil units 30, 31, etc. interact with magnetic units (not shown), which have been fitted on each carrier unit 10a, 10b, etc. By sequentially activating the coil units 30, 31, etc. in a specific way, the carrier units 10a, 10b, etc. are moved through the transport circuit by commutation and the magnetic action of the various alternating poled magnets (attraction and repulsion). The movement therefore occurs without contact, which improves the accuracy of the process actions that must be performed on the products placed on the carrier units 10a, 10b, etc.

In order to provide an improved and more versatile LMS, which is able to manipulate various carrier units 10a, 10b, etc. independently of each other and more particularly, to position them more accurately for the process actions to be performed, the sensor units 20, 21, etc. are provided, which are equipped to detect the movement of at least one of the carrier units 10a, 10b, etc. The sensor units 20, 21, etc. are in this example arranged, viewed in the transport direction of the carriers, before and after a coil unit 30, 31, etc. As shown in Figure 2, each sensor unit 20, 21, comprises two Hall sensors C and S.

According to the shown embodiment, the sensor units 20, 21, etc. and the coil unit 30, 31, etc. are regularly arranged so that each two coil units (e.g. 30, 31) are separated by two sensor units (21, 22). It is noted that the distance between the sensor units 21 and 22 is larger than the distance between the sensor unit 20 and 21 or 22 and 23, respectively.

The sensor units 20, 21, etc. generate a detection signal, when a carrier 10a, 10b, etc. passes under the influence of the sequential series of the alternatingly poled magnets with the movement/position of the carrier. The detection signal is, for example, a voltage signal and, due to the two Hall sensors C and S used, both generate a sine-derived voltage signal with a mutual phase difference. This phase difference depends on the mutual distance between the Hall sensors C and S.

The voltage signal respectively induced by the alternatingly poled magnets, which is generated by each of the Hall sensors C and S, on the one hand provides information concerning the direction of the moved carrier unit and on the other hand is a measure of the position of the carrier unit with respect to these Hall sensors (and therefore to the corresponding sensor unit). As the sensors are mounted at a fixed position on the stator frame, this provides global position information. Based on the polarity of the first arriving magnet (appropriately, the polarity of the first magnet differs from the polarity of the last), the sensor can discern a carrier moving in negative direction from a carrier moving in positive direction.

In the shown example, the used carrier units are sized so that they are always positioned above two of the sensor units. E.g. the carrier unit 10a is positioned above the sensor units 20, 21. Therefore, at any time signals from two sensor units are valid for one carrier unit. According to one embodiment of the invention, an average of the signals from the sensors 20 and 21 is used to determine the position of the carrier unit 10a. In a simple embodiment, both positions can be arithmetically averaged.

Figure 3 shows a schematic side view of a second embodiment of a linear motion suitable for use with the present invention. A number of coil units 40, 41, etc. including coils 42a, 42b, 42c, etc., and sensor units 20, 21, 22, 23, etc. including sensors are installed in the transport circuit and in the transport direction of the carriers 10a, 10b, etc.

According to the shown embodiment, the sensor units 20, 21, etc. and the coil units 40, 41, etc. are regularly arranged so that each two coil units 40, 41; 41, 42; etc. are separated by one sensor unit 21; 22; etc. It is noted that the distance between the coil units 40 and 41, respectively, and the intermediate sensor unit 21 is smaller than the distance between the coil units 41 and 42, respectively, and the sensor unit 22. Therefore, the coil units 40 and 41 and the sensor unit 21 can be said to form a stator element.

However, the distances shown in figures 2 and 3 are only exemplary. It is understood that other distances, other regular arrangements or even irregular, i.e. irregularly spaced, arrangements can be used without departing from the invention.

In the shown example, the used carrier units are sized so that they are positioned above one or two sensor units. E.g. the carrier unit 10c is positioned above the sensor units 23 and 24, whereas the carrier unit 10b is positioned only above the sensor unit 21. Therefore, according to one embodiment of the invention, an average of the signals from the sensors 23 and 24 is used to determine the position of the carrier unit 10c, whereas the signal from the sensor 21 is used to determine the position of the carrier unit 10b.

It is to be noted that in a 'hand-over'-zone between two neighbouring coil units, a carrier should cover at least two sensor units, in order to have sufficiently accurate position information over the entire track. If there is no overlap (e.g. two sensor units are at a mutual distance equal to the carrier length), the two sensor units both give inaccurate position information, when the carrier is in-between.

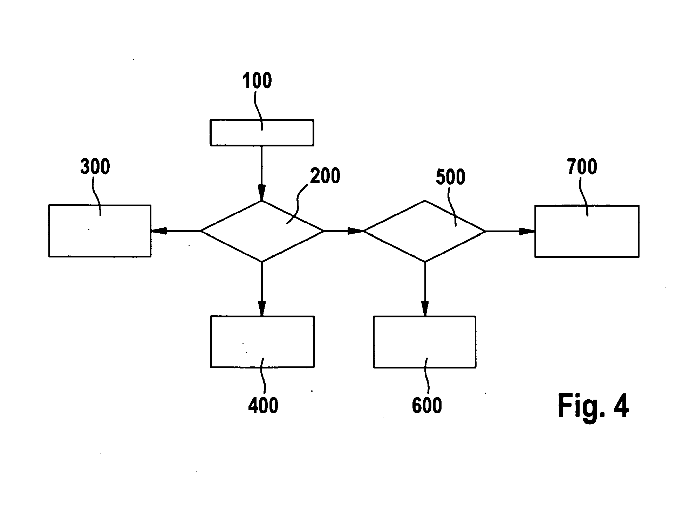

Figure 4 shows a flow diagram according to one embodiment of the invention. The method starts with step 100. In step 200, the number of valid sensor unit signals is determined.

If the number is 1, the method continues with step 300. If the number is 2, the method continues with step 500, and if the number is 3, the method continues with step 400.

In step 300, the signal of the sole valid sensor unit is used to determine the position of the carrier unit.

In step 400, the signal of the mid-position or intermediately positioned valid sensor unit is used to determine the position of the carrier unit.

In step 500, it is determined whether both valid sensor units detects a "transition position" of the carrier unit, this position meaning that the carrier unit is about to leave the sensor range of this particular sensor unit (e.g. sensor unit 23 and carrier 10a according to figure 3). If this is the case, the method continues with step 700. If this is not the case, the method continues with step 600.

In step 700, an average of the both valid sensor unit signals is used to determine the position of the carrier unit.

In step 600, the signal of the sensor unit not detecting the transition position is used to determine the position of the carrier unit.

The described steps of the method according to the invention may be performed in combination, in different order or alone. Use of the method is not limited to the field of semiconductor coating and the scope of the invention is only limited by the appended claims.

## Claims

1. Method of controlling a linear motion system having a linear synchronous motor comprising a stator (2a, 2b, 2c, 2d) and at least one carrier unit (10a, ..., 10k) moveable in relation to said stator (2a, 2b, 2c, 2d),
said stator (2a, 2b, 2c, 2d) comprising at least one sensor unit (20, 21, 22, 23, 24) for determining the position of said at least one carrier unit (10a, ..., 10k),
wherein the signal of at least one of said sensor units (20, 21; 21; 23, 24) is used to determine the position of a carrier unit (10a; 10b; 10c) as a function of the number of the sensor.units showing valid signals for said carrier unit.

2. Method according to claim 1, wherein the signal of a intermediately positioned sensor unit (21) of said valid sensor units is used, in case said number is odd.

3. Method according to claim 1, wherein an average of said valid sensor unit (20, 21; 23, 24) signals is used in case said number is at least two, especially in case said number is even.

4. Method according to any one of the preceding claims, wherein said at least one sensor unit (20, 21, 22, 23, 24) comprises a predefined number of sensors (23a, 23b).

5. Method according to any one of the preceding claims, wherein said stator (2a, 2b, 2c, 2d) comprises sensor units (20, 21, 22, 23, 24) and coil units (30, 31; 40, 41, 42) including at least one coil (31a, 31b, 31c; 42a, 42b, 42c) for moving said carrier units (10a, ..., 10k).

6. Method according to claim 5, wherein each two stator coil units (40, 41; 41, 42) are separated by one sensor unit (21; 22).

7. Method according to claim 5, wherein each two stator coil units (30, 31) are separated by two sensor units (21, 22).

8. Apparatus for performing all steps of a method according to one of the previous claims.

9. Computer program comprising program code means for performing all steps of a method according to one of the claims 1 to 7, when the computer program is executed on a computer or a corresponding processing unit.

10. Computer program product comprising program code means stored on a computer readable data carrier, for performing all steps of a method according to one of the claims 1 to 7, when the computer program is executed on a computer or a corresponding processing unit.
